# EUROPEAN PATENT APPLICATION

(11) **EP 1 121 867 A1**
(43) Date of publication of application: **08.08.2001**
(21) Application number: 00500015.3
(22) Date of filing: 01.02.2000
(51) Int. Cl.: A23L 1/39

(54) **Frozen sauce and procedure for its manufacture**

(71) Applicant: Snow Drops, S.L., 46018 Valencia (ES)
(72) Inventor: Kriss, Charlotte Martha Luise, 46018 Valencia (ES)
(74) Representative: Marques Alos, Fernando

(57) **Abstract**

**"FROZEN SAUCE AND PROCEDURE FOR ITS MANUFACTURE",** characterised as being presented in portions in the form of disks similar to frozen drops, the ingredients of which are divided into a common production base and primary and secondary condimenting portions. In a first phase, suitable proportions of base ingredients and primary and secondary condiments are dry-mixed to an even mixture to which water is added. In a second phase, the remaining primary and secondary condiments are added and the product is cooked. In a third phase the product is cooled and in a fourth, the base is mixed with the final characterising condiments. The fifth phase gives the portions of sauce their shape and in the final phase they are frozen, producing the final product ready for packing.

## Description

### DESCRIPTION OF THE INVENTION

The intention of this invention, as expressed in the statement of the descriptive report, consists of a "**FROZEN SAUCE AND PROCEDURE FOR ITS MANUFACTURE**" in a suitable format for individualised or large scale dosing.

### BACKGROUND

On the market there are currently a series of industrially manufactured sauces aimed at replacing home-made or traditional sauces.

As is mentioned in the description of the invention, these sauces have two different uses or types of applications. On the one hand, individualised application, which would be defined as the preparation of one or more dishes, such as a restaurant activity or the preparation of a dinner or a meal at home.

On the other hand, large scale application or dosing would be defined as that referring to applications where the sauce is a complement to a dish prepared on a large scale, of which large quantities would be prepared for division into portions for service or sale, for instance, as a pre-cooked meal.

The thinking behind these industrially prepared sauces is their immediate availability for use and their ability to be stored for a long period of time.

In this sense, a large number of proposals have been made based almost entirely on the dehydration of the sauce or the pre-cooking thereof, which in the majority of cases involves the addition of preserving elements as well as colourings and even flavour enhancers.

While these products are wholly legal, today there is a well-defined preference towards natural articles free from all kinds of complementary chemical products, which is why these sauces are not generally optimally accepted and are even rejected more and more as a non natural sub-product.

Furthermore, these sauces, as they come in powder, viscose or granulate presentations, are not suitable for industrial dosing, which would tend to be based on weight, with the difficulties that this involves.

On the other hand, there are processes for preparing frozen sauces, but these always refer to sauces that are consumed hot, and therefore need to be heated for preparation.

There is another important problem with these sauces, which consists of the separation caused of the fatty compounds and certain liquids from the rest of the components of the sauce when it is frozen, which means that when it is defrosted, the sauce takes on an unpleasant appearance and has to be stirred or beaten to restore the right appearance.

Finally, current industrial processes dealing with the preparation of frozen sauces are not suitable for the preparation of sauces to be consumed cold, as the defrosting process is a relatively long one and if it is carried out by the application of heat, the cold sauce becomes hot and would need to rest some time to reach room temperature, and even then we would be left with the problems of the separation of liquids and fats from the rest of the components.

The new process described below allows the preparation of any kind of sauce for cold consumption capable of being stored frozen for long periods of time, which do not incorporate any kind of chemical product and satisfactorily resolve the problems of low temperature oil separation and may also be dosed in units instead of in terms of weight, as they area served preferably in a new, ingenious disk format, the configuration of which might be associated with frozen drops, all of equal weight and form and very easy to handle.

The sauce obtained with this new preparation process presents short time defrosting at room temperature, after which it is totally ready for consumption in such a way that its texture, fluidity, shine, colour and taste are exactly the same as those of the sauce before being frozen, which in turn correspond to the characteristics of a sauce prepared along traditional lines.

The new sauce involves two clearly differentiable parts: in the first place, a base of common preparation providing the thermodynamic and physical properties of the sauce; and in the second place, a separate condimenting part whose ingredients will differentiate and determine the final type or taste of the sauce prepared following this procedure.

The base is also constituted by two different parts: a common body and a pre-condimenting part only necessary in some cases to direct the base towards the taste or type of final sauce that we wish to achieve, which will be finally constituted with the condimenting part.

In essence, any kind of base is made on the basis of 20 ingredients, each of which may be used in different proportions, types or states.

This general set of ingredients may be divided into three groups depending on their general influence in configuring all the tastes or types of sauces that can be developed: the base ingredients making up the common body, and the primary and secondary pre-condiments.

The base ingredients are those which give the sauce consistency or body.

The primary pre-condiments are involved in the preparation of the base sauce by giving it its characteristic organoleptic properties.

The secondary pre-condiments are included in the composition of the base in order to provide it with highly specific organoleptic properties, and so their presence is directly linked to a single taste or a specific kind of sauce.

The preparation of new kinds of sauce may involve the inclusion of new ingredients in the groups of pre-condiments.

There follows a tables of the intervals, expressed in percentage weight, of the ingredients in the base.

### Base ingredients:

| | |
|---|---|
| Sugar | 10.28 - 1.63 |
| Flour | 21.20 - 12.60 |
| Salt | 3.07 - 0.54 |
| Water | 70.17 - 24.42 |

### Primary pre-condiments:

| | |
|---|---|
| Tomato | 51.10 - 1.90 |
| Mustard | 1.85 - 0.30 |
| Egg yolk | 12.10 - 4.70 |
| Soy sauce | 3.43 - 1.30 |
| Wine | 32.56 - 2.70 |
| Vinegar | 15.12 - 2.70 |
| Fatty products | 8.5 - 0.93 |

### Secondary pre-condiments:

| | |
|---|---|
| Curry | 1.92 |
| Pepper | 0.55 |
| Juice | 50.00 |
| Chocolate | 12.7 |
| Caper | 0.32 |
| Condiments | 16.61 |
| Laurel | 0.27 |
| Milk | 47.55 |
| Parmesan cheese | 1.175 |

Basically, the new procedure starts in a first phase where the correct proportions of flour, salt and sugar and dried primary and secondary pre-condiments are dry-mixed and beaten until a lump-free blend is obtained, to which water is gradually added to achieve a viscose, flexible, fine mass.

Immediately afterwards, in a second phase the mixture is taken to a cooking mixing pot, preferably preheated, where the remaining primary and secondary pre-condiments are added to make up the base, such as fatty ingredients and non solid ingredients necessary for directing the organoleptic characteristics of the base towards the final taste or type of sauce, and the product is cooked at a temperature of between 110°C and 120°C for 20 to 30 minutes.

In a third phase, the product base obtained in the pot is chilled to a temperature of no more than 5 degrees centigrade, and this is when the base is considered finished and when it may be stored in refrigerated rooms until it passes on to the following phase in order to maintain a suitable stock.

In a fourth phase, the prepared base is cold-mixed with the final characterising condiments, which, when added, give the sauce its full flavour, smell and colour. To do this, the base is placed in a emulsifying cutting machine together with the different ingredients making up the condimenting, and the mixture remains inside for a variable amount of time depending on amount and on the performance of the machine, until the required texture and fluidity are achieved. This operation may be carried out at room temperature, although special attention must be paid to this aspect when the ingredients include dairy products.

Once the mixture of the fourth phase is complete, the sauce is ready in terms of composition, and will pass on to the phase intended to configure the final form and freezing.

To this end, the sauce in paste form is taken up by a pneumatic piston that doses it in the form of drops on the conveyor belt of a cryogenic tunnel previously bathed in liquid nitrogen to bring it down to a temperature of -80° to -145°. This bath is necessary to reduce the temperature sufficiently in order to freeze the surface of the drops of sauce falling on the belt, which will then pass through the liquid nitrogen cryogenic tunnel at a temperature of -90°C to -120°C, where they will reach the best temperature to freeze the interior of the drop.

Optionally, when the sauce is being made into drop form, the process may be altered to give other forms such as dice, figures, objects, etc. which will preferably be carried out by means of moulds welded to the conveyor belt in the cryogenic tunnel and will receive the correct dose of sauce through the pistons.

The cryogenic freezing of natural ingredients allows the original flavours and aromas to be captured, and there is therefore no need to add preservatives, colourings or taste enhancers such as the rather unhealthy Monosodium Glutamate.

It allows the fast preparation of menus while maintaining a high cooking quality with decorative effects, and the basic functions of the products are as complements in cooking, garnishing, decorating, etc.

### DESCRIPTION OF THE DRAWINGS

In order to illustrate what we have described up to now, this descriptive report is accompanied by a sheet of illustrations, which make up an integral part hereof, where a diagram is set out of the process used in obtaining frozen sauces, described in the form of a block diagram.

### DESCRIPTION OF A PRACTICAL CASE

A practical example of production starts with a sauce comprising flour at 10-18% by weight, concentrated tomato 3-5%; sugar 12-18%; salt 2-4%; water 50-60%, olive oil 3-7%; ground laurel 0.1-0.3%; pepper 0.1-0.8%, and the indicated phases are used in order to achieve portions or drops of hot sauce.

In the first phase (1), the base elements are mixed and beaten - the flour, salt and sugar (7) - and water is systematically added until an even mass is obtained.

Following this, in a second phase (2), the mixture is transferred to a mixing cooking pot, where the primary and secondary pre-condiments are added (8) - tomato, oil, pepper and ground laurel - and the product is cooked for 21 minutes at 130°C.

In a third phase (3), the resulting base is cooled (9) to 2-3 degrees centigrade and the finished base may be stored for a certain period of time before passing on to the following phase in order to maintain a stock of each kind of sauce.

In the fourth phase (4), the cold mixture is made of the resulting base with the characterising condiments (10) - wine, apple, olives, caper, brandy and aubergine - for a time of 1.5 minutes. After this step, the sauce is ready and may pass on to be configured in the form of drops (5) and to be frozen (6).

To do this, the pasty sauce is taken up by pneumatic pistons that pour it drop by drop on a conveyor belt bathed in liquid nitrogen, where they are instantly frozen on the surface before passing through a cryogenic tunnel to be deep frozen, being the final product ready for packing (11).

Having established the expressed concept, there follows the report of claims, bringing together the new developments that we wish to claim:

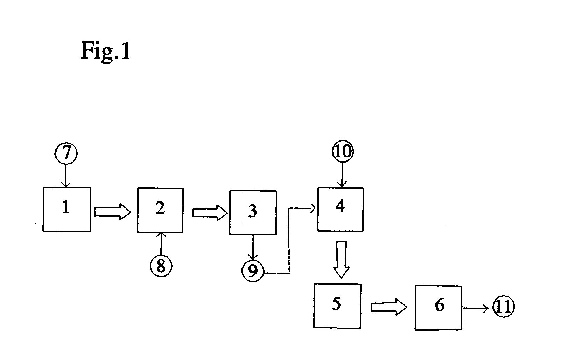

## Claims

1. **"FROZEN SAUCE"** in a suitable format for individualised or large scale dosing characterised essentially by being presented in portions in the form of disks similar to frozen drops, the ingredients of which are divided into two clearly different parts: in the first place a common preparation base giving the sauce its thermodynamic and physical properties; and in the second place, a condimenting part, the ingredients of which will determine the flavour and type of the sauce, setting it aside and giving it its own personality. The common base is made from a number of ingredients, each of which may be used in different proportions, types or states, which are divided into three groups in terms of their general influence on the configuration of all the sauces that may be developed: the base ingredients, which are those that give the sauce consistency or body; the primary pre-condiments, which are set out in the base to provide it with the characteristic organoleptic properties to guide the product towards a certain group of sauces, and; the secondary pre-condiments, which give the common base a very specific set of organoleptic characteristics, and the presence of which is directly linked to the unique taste or specific type of the sauce, with the percentage weight intervals within the based mixture being as follows: Sugar 10.28 - 1.63%; Flour 21.20 - 12.60%; Salt 3.07 - 0.54%; Water 70.17 - 24.42%. Primary pre-condiments: Tomato 51.10 - 1.90: Mustard 1.85 - 0.30; Egg yolk 12.10 - 4.70; Soy sauce 3.43 - 1.30; Wine 32.56 - 2.70; Vinegar 15.12 - 2.70; Fat products 8.5 - 0.93%. Secondary pre-condiments: Curry 1.92; Pepper 0.55; Juice 57.00; Chocolate 12.7; Caper 0.32; Condiments 16.61; Laurel 0.27; Milk 47.55 and parmesan cheese 1.175.

2. **"FROZEN SAUCE"**, as in the previous claim, characterised because the creation of new flavours or types of sauce might involve the inclusion of new primary and/or secondary pre-condiments to the list above.

3. **"PROCEDURE FOR MANUFACTURING THE FROZEN SAUCE"**, characterised as comprising six different phases, where in the first phase (1), the flour, salt and sugar and dried primary and secondary solid pre-condiments are dry-mixed (7) and beaten until a lump-free mixture is obtained, to which water is gradually added to produce a viscose, flexible, fine mass. Following this a second phase (2), where the mixture is transferred to a, preferably preheated, mixing cooking pot, where the remaining primary and secondary pre-condiments are added (8) to make up the base and where the product is cooked at 110°C - 140°C for 20 to 30 minutes. In a third phase (3), the product obtained in the pot (9) is forced down to a temperature of no more than 5 degrees centigrade, at which point the common base is considered finished and may be stored in refrigerated chambers until it passes on to the following phase for the maintenance of a suitable stock. In a fourth phase (4), the prepared base (9) is cold-mixed in an emulsifying cutting machine with the final characterising condiments (10) to give the sauce its full flavour, smell and colour, with the sauce remaining here for a variable amount of time depending on the amount and the performance of the machine, after which the sauce will be ready as regards composition, and the fifth phase (5) of the sauce will take place to form disks similar to frozen drops, for which task, the sauce is taken up by a pneumatic piston, which doses it in the form of drops onto the conveyor belt of a cryogenic tunnel previously bathed in nitrogen in order to cause the sauce drops falling onto it to freeze superficially, before the beginning of the final phase (6), where the superficially frozen drops pass through the cryogenic tunnel, where they are deep frozen and configure the final product ready for packing (11).

4. **"PROCEDURE FOR MANUFACTURING THE FROZEN SAUCE",** according to the above claims, characterised because the drop formation phase (6) may optionally be altered to develop other forms such as dice, figures, objects, etc. for which preferable use will be made of moulds welded to the conveyor belt of the cryogenic tunnel, where the correct dose of sauce will be passed through the pistons.
